# EUROPEAN PATENT SPECIFICATION

(11) **EP 1 306 797 B1**
(45) Date of publication and mention of the grant of the patent: **30.03.2005**
(21) Application number: 02250558.0
(22) Date of filing: 28.01.2002
(51) Int. Cl.: G06K 11/14

(54) **Touch panel device**
Berührungsempfindliche Tafel
Ecran tactile

(30) Priority: 23.10.2001 JP 2001325328
(43) Date of publication of application: 02.05.2003
(73) Proprietor: FUJITSU LIMITED, Kawasaki-shi, Kanagawa 211-8588 (JP)
(72) Inventor: Sano, Satoshi, c/o Fujitsu Limited, Kawasaki-shi, Kanagawa 211-8588 (JP); Katsuki, Takashi, c/o Fujitsu Limited, Kawasaki-shi, Kanagawa 211-8588 (JP); Takahashi, Yuji, c/o Fujitsu Limited, Kawasaki-shi, Kanagawa 211-8588 (JP); Nakazawa, Fumihiko, c/o Fujitsu Limited, Kawasaki-shi, Kanagawa 211-8588 (JP)
(74) Representative: Stebbing, Timothy Charles

(56) References cited:
- US-A- 4 908 542
- PATENT ABSTRACTS OF JAPAN vol. 2000, no. 03, 30 March 2000 (2000-03-30) -& JP 11 338625 A (SHARP CORP), 10 December 1999 (1999-12-10)
- PATENT ABSTRACTS OF JAPAN vol. 2000, no. 22, 9 March 2001 (2001-03-09) -& JP 2001 125725 A (FINPUT CO LTD), 11 May 2001 (2001-05-11)
- PATENT ABSTRACTS OF JAPAN vol. 1995, no. 05, 30 June 1995 (1995-06-30) -& JP 07 036605 A (KOJI TODA), 7 February 1995 (1995-02-07)

## Description

The present invention relates to a touch panel device for detecting a touch thereon of a finger or an object such as a pen, more specifically to a touch panel device wherein an interdigital transducer (hereinafter referred to as "IDT") is used, for detecting a touched position by sensing an attenuation or interruption of a surface acoustic wave (hereinafter referred to as "SAW").

Along with the growing popularity of computer systems mainly represented by personal computers, devices for inputting new information or giving various instructions to a computer system by touching a finger or pen on a screen of a display device on which information is displayed by a computer system have come to be widely utilized. When inputting operation is executed by a touching method in response to information displayed on a screen of a display device of a personal computer etc., a touched position (indicated position) has to be detected with a high accuracy.

Two popular types of touch panel device for detecting a position touched by a finger or pen are a type provided with a resistance film and a type in which ultrasonic waves are used. The former type having a resistance film detects a change of a partial ratio of voltage caused by a touch of an object on the resistance film. A device of this type has an advantage of low power consumption, but has a disadvantage in such aspects as response time, detection performance and durability.

On the other hand, the type in which ultrasonic waves are utilized propagates a SAW on for instance a non-piezoelectric substrate, so that a position touched by an object is detected by sensing an attenuation of the SAW caused by a touch of an object such as a pen on the non-piezoelectric substrate. The inventors of the present invention have been pursuing studies and development of a touch panel device, wherein an IDT that can be formed in a batch by a photolithography technique is used as a transducer for exciting or receiving SAWs. In such a touch panel device, an element constituted by an IDT and a piezoelectric thin film is employed as an excitation element for generating SAWs, or as a receiving element for receiving the propagated SAWs.

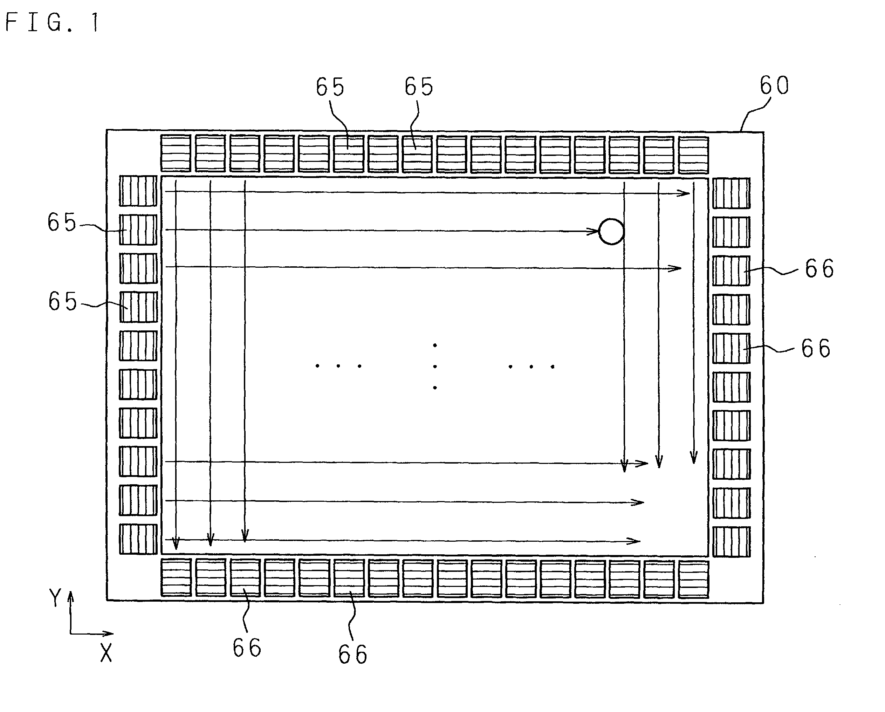

FIG. 1 is a schematic drawing showing a configuration of a conventional touch panel device wherein IDTs are used in the above-mentioned manner. Referring to FIG. 1, reference numeral 60 designates a rectangular non-piezoelectric substrate made of, for instance, a glass material, and on one of the respective end portions (sides) in the X-direction and Y-direction of non-piezoelectric substrate 60, a plurality of excitation elements 65 consisting of an input IDT and piezoelectric thin film for SAW excitation are aligned in such a manner that each of them corresponds to each of a plurality of tracks. Also, on the remaining two sides of substrate 60, a plurality of receiving elements 66 consisting of output an IDT and a piezoelectric thin film for receiving SAWs are aligned so as to confront (face) the excitation elements 65.

In the touch panel device of FIG. 1, electric signals are inputted to each of excitation elements 65 to excite a SAW which then propagates on the non-piezoelectric substrate 60, and each of receiving elements 66 receives the propagated SAW. However, when an object touches on a propagating route of the SAW on the non-piezoelectric substrate 60, the SAW is attenuated. Therefore whether, and a position where, an object touched can be detected by sensing whether an attenuation of signal level received by the receiving elements 66 has taken place.

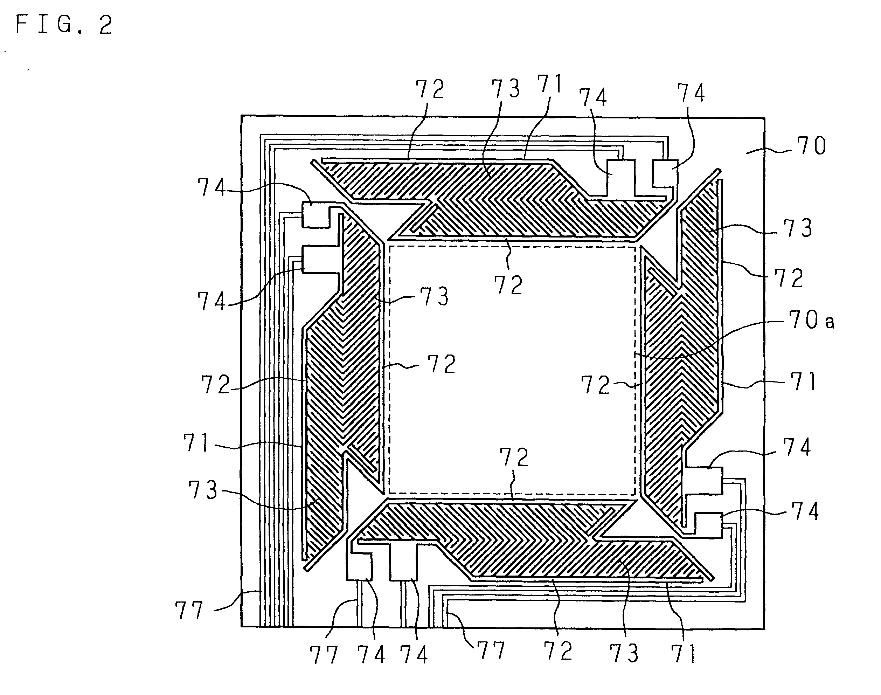

Also, the inventors of the invention have proposed a touch panel device wherein excitation elements and receiving elements are disposed so as to propagate a SAW diagonally (along diagonal lines). FIG. 2 is a schematic drawing showing a configuration of electrodes of the mentioned touch panel device. Referring to FIG. 2, numeral 70 is a rectangular non-piezoelectric substrate made of for instance a glass material, and a central area surrounded by broken lines is a detecting region 70a where a touched position can be detected.

In the frame region outside of the detecting region 70a, which corresponds to the peripheral area of non-piezoelectric substrate 70, four IDTs 71 are placed. Each IDT 71 is provided with bus electrodes 72, 72 confronting each other and respectively comprising comb-like electrode fingers 73 that are bent halfway and alternately arranged. By such an arrangement, a row of comb-like electrode fingers 73 inclined in two directions from the confronting direction of bus electrodes 72, 72 is formed, which enables SAW excitation in two directions and SAW reception from two directions. In this example, IDTs 71 on the upper and lower sides are functioning as excitation elements for generating waves in two different directions at a time, while IDTs 71 on the left and right sides act as receiving elements for receiving waves from two different directions.

On the upper and lower sides, terminals 74, 74 for inputting and grounding connected to bus electrodes 72 of the respective IDTs 71 are provided. Also, terminals 74, 74 for outputting and grounding connected to bus electrodes 72 of the respective IDTs 71 are provided on the left and right sides. To each of terminals 74, respective lead lines 77 are connected.

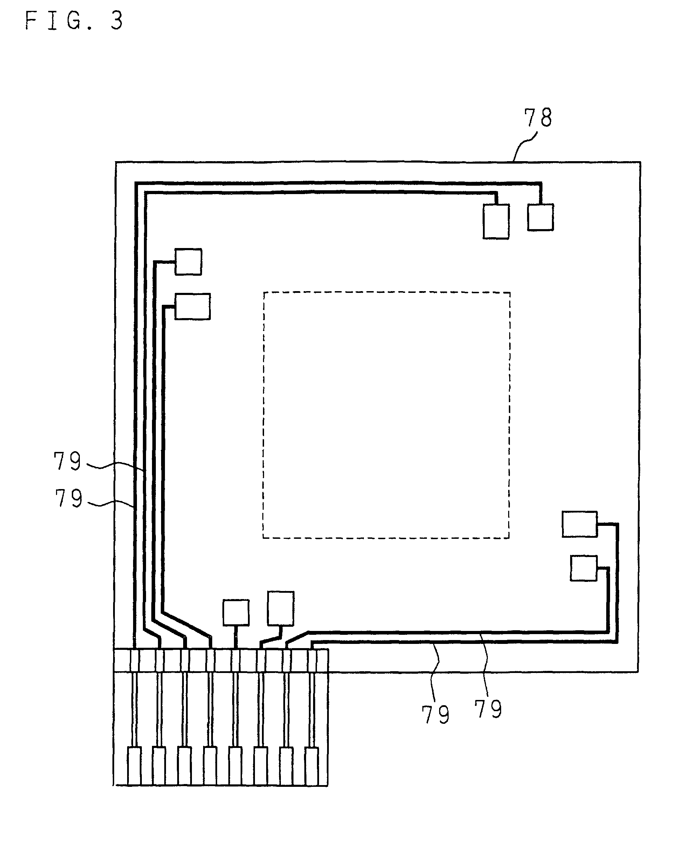

FIG. 3 is a schematic drawing of a flexible substrate 78 corresponding to FIG. 2. On the flexible substrate 78, a conductor pattern 79 is formed at a position corresponding to the lead lines 77. When such a flexible substrate 78 is placed over a configuration of electrodes shown in FIG. 2, a touch panel device is constituted.

It is advantageous from a viewpoint of the mounting process to utilize the flexible substrate 78 for drawing out signals from a touch panel device. As shown in FIGs. 2 and 3, IDTs 71 surrounded by long-sized bus electrodes 72 are disposed on the sides in the frame region closer to the detecting region 70a, around which the lead lines 77 are disposed, and all the lead lines 77 are united at one side. The lead lines 77 united in this way are connected to an exterior circuit through the conductor pattern 79 on the flexible substrate 78. Now, since the frame region is an area where a touched position cannot be detected, it is a critical factor for enhancing a product value to minimize the area of the frame region, and for such a purpose it is essential to narrow the width of bus electrodes 72 and lead lines 77.

In a conventional configuration as shown in FIGs. 2 and 3, a problem is that the intensity of the received SAW is lowered due to a resistance loss that is caused while a signal is transmitted through each of long-sized bus electrodes of IDTs placed all over the panel. In order to prevent such a resistance loss it is necessary to increase the width of bus electrodes and lead lines, which, however, is contradictory to the purpose of minimizing the area of the frame region. Meanwhile it might be another option to increase the film thickness of the above-mentioned components, but in this case a problem still remains that the production process will be more complicated, because the optimum condition of film thickness is different between the excitation/reception unit (IDT) and the transmission unit (bus electrodes and lead lines).

JP 07 036605A discloses a touch panel device according to the preamble of claim 1. Each side of the panel is formed with three transmitting or transducer regions.

Accordingly, it is desirable to provide a touch panel device wherein a resistance loss in a transmission unit can be minimized without enlarging a frame region.

It is also desirable to provide a touch panel device wherein the frame region can be further narrowed.

According to the present invention there is provided a touch panel device in which interdigital transducers [IDTs] for exciting or receiving surface acoustic waves are provided, each IDT comprising a pair of mutually-facing bus electrodes oriented along the sides of a detecting region of the touch panel device and placed on a peripheral area of a substrate such that one bus electrode of the pair is positioned closer to the detecting region than the other bus electrode, and comb-like electrode fingers which extend between, and are alternately connected to, the mutually-facing bus electrodes; characterized by further comprising at least one drawing electrode connected to said bus electrode positioned closer to the detecting region and led out to the peripheral area side of said substrate.

Thus, the drawing electrodes electrically connect the inner bus electrode to the outer region of the substrate by passing through the inside of the IDT. As a result, signals pass through the drawing electrodes instead of being transmitted through elongated bus electrodes one after another, so that resistance loss in the bus electrodes is reduced.

In a preferred embodiment the IDT is divided up due to being segmented by the drawing electrode.

In this embodiment, preferably, the IDT is evenly segmented into a plurality of repeated regions by the drawing electrode. As a result, conversion efficiency of SAWs excited at each side is levelled, therefore the conversion process can be simplified.

Preferably also, the drawing electrode is disposed so that the impedance of each segmented region of the IDT is the same. As a result, excitation efficiency can be levelled (made uniform).

In addition, preferably, the electrostatic capacitance of each segmented region of the IDT is equal. As a result, a stabilized drive detection can be performed.

Moreover, a plurality of drawing electrodes may be provided, whose impedance is made the same by ensuring that the resistance value of each of the plurality of drawing electrodes is equal. As a result, influence of resistance loss on the input or output of signals can be restrained within a certain level in each segmented region.

In any of the above embodiments, preferably the width of the drawing electrode is (3/8+n)λ(λ: wavelength of the SAW, n: an integer that is not negative). In this way, a prediction of the characteristics can be made based on design parameters, and a drop in excitation efficiency can be prevented.

Conveniently, the drawing electrode employed in the present invention is made of metal (e.g. a metal strip array). As a result, a cancelling effect of a reflected wave can be expected also from the drawing electrode, and the influence of unnecessary mechanical reflections that may occur in the IDT can be alleviated.

In addition, preferably, at least one pad connected to the drawing electrode is provided within the bus electrode. As a result, resistance can be reduced by utilizing the conductor unit (conductance) of the bus electrode, and the frame region can be narrowed by omitting the area for the pad. Moreover, the risk of imperfect contact can be minimized thus resulting in an improved yield.

In another preferred embodiment, the device further comprises at least one pad placed in the drawing electrode, and a flexible substrate having at least one connection unit corresponding to the pads.

In the touch panel device of this embodiment, a flexible substrate is provided so that resistive losses can be further reduced and transmission can be stabilized.

Preferably, the flexible substrate is disposed so as to cover the IDT. In this way the flexible substrate can also serve as a buffer member against an unexpected impact, resulting in a higher reliability.

In addition, preferably, the flexible substrate has at least one leading line connected to the drawing electrode on a portion thereof covering the IDT. As a result, the frame region can be narrowed.

The flexible substrate may be of a form folded in the direction of thickness of the substrate on which the IDT is placed. As a result the leading lines can be disposed along the folded portion, without occupying space on top of the substrate. Further, it is preferable that the flexible substrate can be formed from a single strip; in other words, the flexible substrate is made from a planar strip folded into a three-dimensional shape. This facilitates a mass production.

Reference is made, by way of example, to the accompanying drawings in which:
FIG. 1 is a schematic drawing showing a configuration of a previously-proposed touch panel device.
FIG. 2 is a schematic drawing showing a configuration of electrodes in a previously-proposed touch panel device.
FIG. 3 is a schematic drawing showing a previously-proposed flexible substrate.
FIG. 4 is a schematic drawing showing a configuration of an example of an IDT according to the present invention.
FIG. 5 is a schematic drawing showing a configuration of another example of an IDT according to the invention.
FIG. 6 is an enlarged fragmentary schematic drawing of an example of an IDT according to the invention.
FIGs. 7A and 7B are conceptual drawings showing configurations of comb-like electrode fingers of the IDT in FIG. 6.
FIG. 8 is an enlarged fragmentary schematic drawing of another example of the IDT according to the invention.
FIGs. 9A and 9B are conceptual drawings showing configurations of comb-like electrode fingers of the IDT in FIG. 8.
FIG. 10 is a schematic drawing showing a configuration of an example of a pad.
FIG. 11 is a schematic drawing showing a configuration of another example of a pad.
FIG. 12A is a schematic drawing showing the overall configuration of a flexible substrate.
FIG. 12B is a schematic drawing showing a panel body.
FIGs. 13A and 13B are perspective views showing configurations of flexible substrates.
FIG. 14A is a plan view showing a layout example of a flexible substrate placed over a panel body.
FIG. 14B is a perspective view showing a layout example of a flexible substrate placed over a panel body.
FIG. 15A is a plan view showing another layout example of a flexible substrate placed over a panel body.
FIG. 15B is a perspective view showing another layout example of a flexible substrate placed over a panel body.
FIG. 16A is a perspective view showing a configuration of a folding type flexible substrate.
FIG. 16B is a perspective view showing a panel body.
FIGs. 17A to 17C are schematic drawings showing examples of unfolded forms of flexible substrates.

### (First Embodiment)

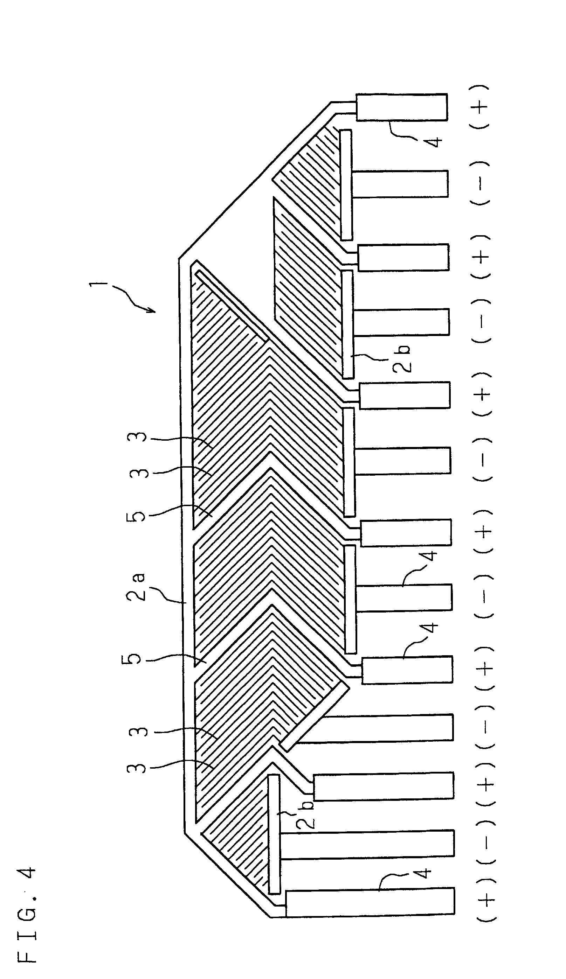

FIG. 4 is a schematic drawing showing a configuration of an IDT to be used as excitation element or receiving element in a touch panel device embodying the invention. The IDT 1 of the invention is provided with bus electrodes 2a, 2b facing each other and respectively comprising comb-like electrode fingers 3 that extend obliquely from each bus electrode and (at least at a center portion of the IDT) are bent halfway along their lengths so as to extend obliquely in another direction. The fingers 3 are arranged alternately so as to be interdigitated. By such an arrangement, in the IDT 1 of the invention a row of comb-like electrode fingers 3 inclined in two directions from a line drawn between bus electrodes 2a, 2b is formed, which enables SAW excitation in two directions and SAW reception from two directions, as in the previous proposal of the inventors.

The bus electrode 2a positioned closer to the center of the panel (on the detecting region side) is long-sized (elongated) as in the prior art, and this bus electrode 2a is for instance a (+)side electrode, ends of which are connected to (+)side pads 4. Inside the IDT 1, a plurality of drawing electrodes (input or output electrodes) 5 connected to the bus electrode 2a are provided at a constant pitch (spacing), bent halfway and in parallel with the comb-like electrode fingers 3. These drawing electrodes 5 are respectively connected to (+)side pads 4. The bus electrode 2b on the peripheral area side of the panel (farther side from the detecting region) is for instance a (-)side electrode, and each bus electrode 2b is connected to a (-)side terminal 4.

The IDT 1 is segmented into a plurality of (partially-repeated) regions by the mentioned plurality of drawing electrodes 5. As a result, the excitation intensity of the SAW in each segmented region becomes nearly constant, and impedance in each segmented region also becomes nearly equal. Specifically, the capacitance that is determined by the pitch and length (cross width) of drawing electrode 5 in each segmented region is made nearly constant, and likewise the width and length of each drawing electrode 5 are adjusted so that its resistance becomes nearly equal.

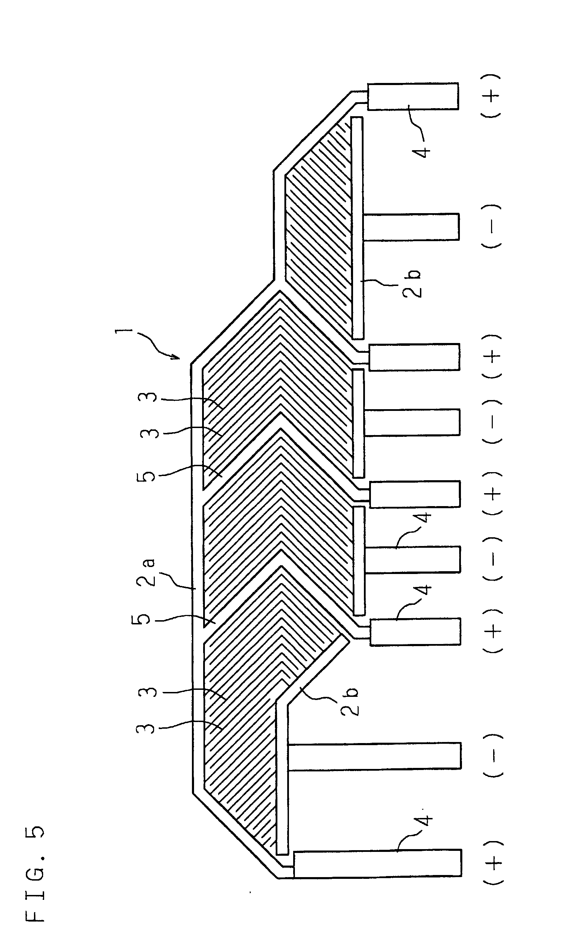

FIG. 5 is a schematic drawing showing another configuration of an IDT 1 embodying the invention. The example shown in FIG. 5 is a simplified configuration of intersection of electrodes corresponding to the right hand side of FIG. 4, by which a complication of electrode pattern (bus electrodes 2a, 2b and drawing electrodes 5) is alleviated, and resistance load imposed on a part of drawing electrodes 5 is also alleviated. Also, in this configuration the pitch of drawing electrodes 5 becomes twice as large since the aperture of a corner of the IDT 1 is halved, therefore excitation efficiency at this portion is intensified.

### (Second Embodiment)

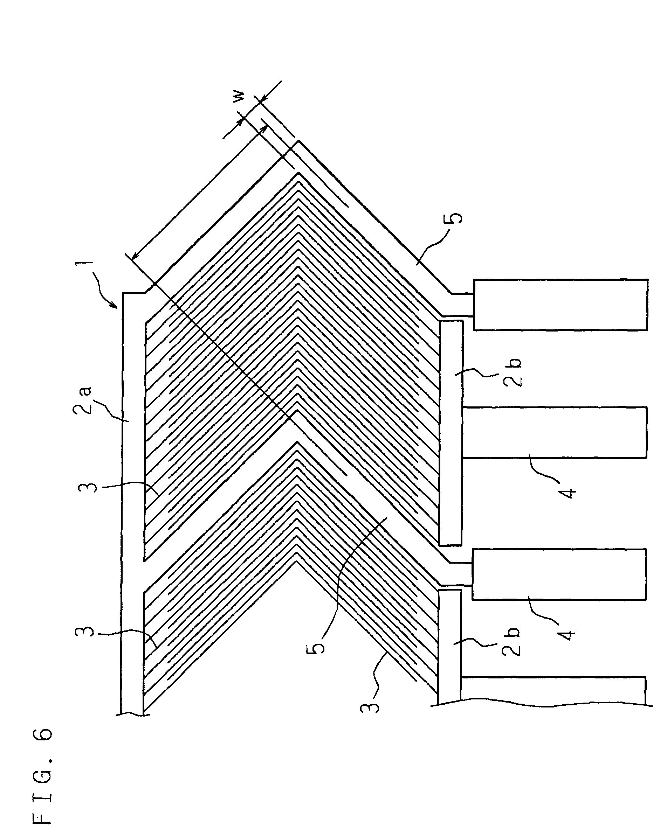

The following description relates to the pitch and width of drawing electrodes 5. FIG. 6 is an enlarged fragmentary schematic drawing of an example of an IDT 1 according to the invention. The example of IDT 1 shown in FIG. 6 is provided with mutually opposite bus electrodes 2a, 2b from each of which comb-like electrode fingers 3 are alternately extended one by one and bent halfway (single bent electrode finger type).

In adjacent regions of IDT 1 segmented by the drawing electrodes 5, the pitch and width of drawing electrodes 5 are determined in such a manner that formation pattern of comb-like electrode fingers 3 will not be disordered when the drawing electrodes 5 are added. It is preferable that the pitch of drawing electrodes 5 is an integral multiple of the cross width in one of the directions determined by a formation pattern of comb-like electrode fingers 3, and best of all it is optimum to make it equal to the cross width.

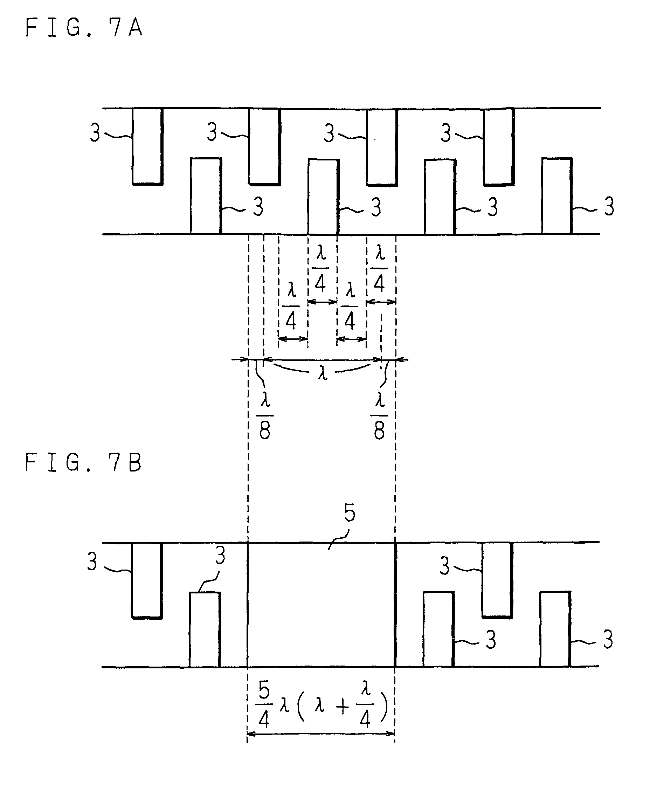

Further, it is preferable that the width w of drawing electrodes 5 is determined as w=(1/4+n)λ, where λ is the SAW wavelength and n is a natural number. FIG. 7A is a conceptual drawing of a configuration of comb-like electrode fingers 3, wherein the width of a comb-like electrode finger 3 is λ/4, while an interval between adjacent comb-like electrode fingers 3 is also λ/4. When the drawing electrode 5 is formed with a width determined as for example w=(λ+λ/4)=5λ/4 where n=1 (as FIG. 7B) for the mentioned formation pattern of comb-like electrode fingers 3, the electrode pattern will not be disordered though the drawing electrode 5 thus formed is added.

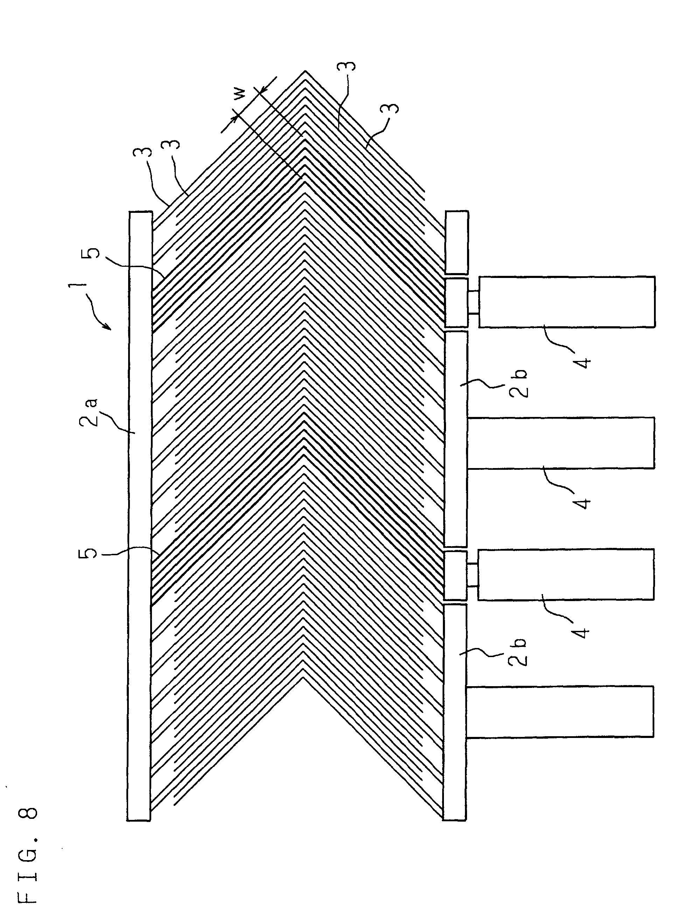

FIG. 8 is an enlarged fragmentary schematic drawing of another example of IDT 1 according to the invention. The IDT 1 shown in FIG. 8 is provided with confronting bus electrodes 2a, 2b from each of which comb-like electrode fingers 3 extend alternately two by two and bend halfway (double bent electrode fingers type). As a result of such a configuration, an influence of SAW reflection in comb-like electrode fingers 3 is restrained. Also, the drawing electrodes 5 are constituted by a plurality of electrode lines of the same width as that of comb-like electrode fingers 3, so that the effect of reflection can also be reduced in the drawing electrodes 5.

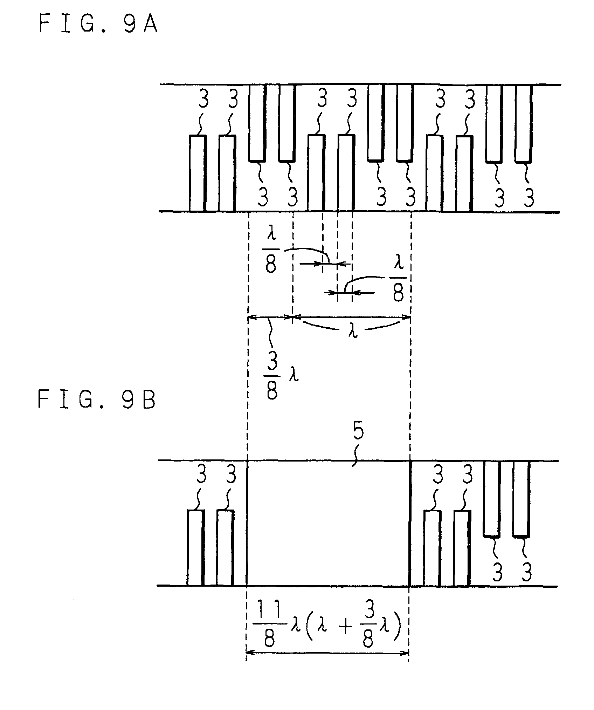

It is preferable that the width w of drawing electrodes 5 is determined as w=(3/8+n)λ(n: an integer that is not negative), where λ is the SAW wavelength. FIG. 9A is a conceptual drawing of a configuration of comb-like electrode fingers 3, wherein the width of a comb-like electrode finger 3 is λ/8, while an interval between adjacent comb-like electrode fingers 3 is also λ/8. When the drawing electrode 5 is formed with a width determined as for example w=(λ+3λ/8)=11λ/8 where n=1 (as FIG. 9B) for the aforementioned formation pattern of comb-like electrode fingers 3, the electrode pattern will not be disordered when the drawing electrode 5 thus formed is added. Moreover, as a result of such a configuration of drawing electrodes 5, it is possible to maintain the comb-like structure of λ/8 that provides an advantage of reducing internal reflection of the waves.

### (Third Embodiment)

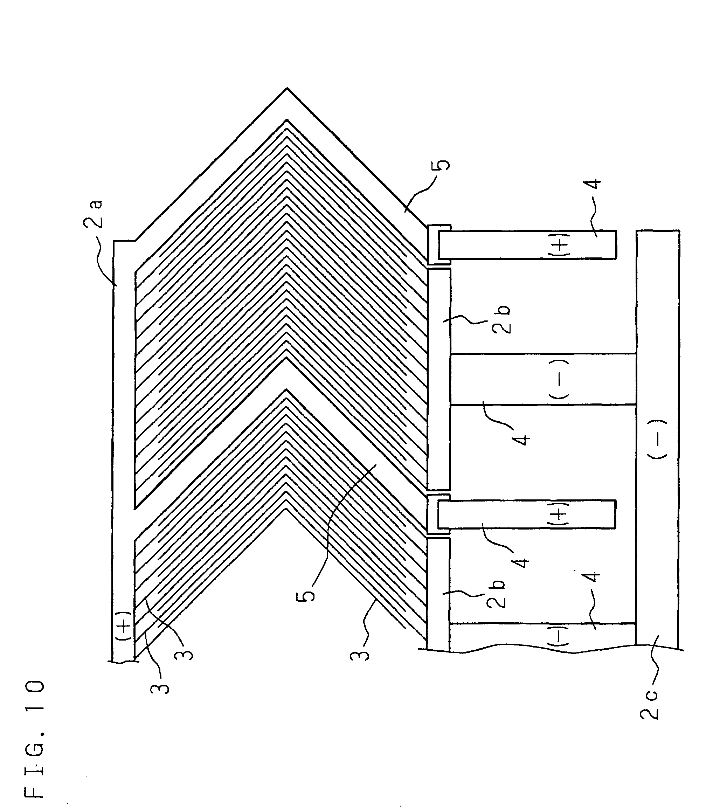

Configurations of pads 4 of drawing electrodes 5 shall now be described. FIG. 10 is a schematic drawing showing a configuration of an example of pads 4, wherein a plurality of pads 4 on the (-)side connected to for instance the bus electrode 2b, are connected to a further bus electrode 2c. Each of pads 4 on the (+)side connected to the drawing electrodes 5 is disposed within a region enclosed by these bus electrodes 2b, 2c. In this configuration, even if an imperfect contact is caused in one of the pads 4, it will not affect the other pads since all of the (-)side pads 4 are connected to the bus electrode 2c. In this way, production yield can be improved.

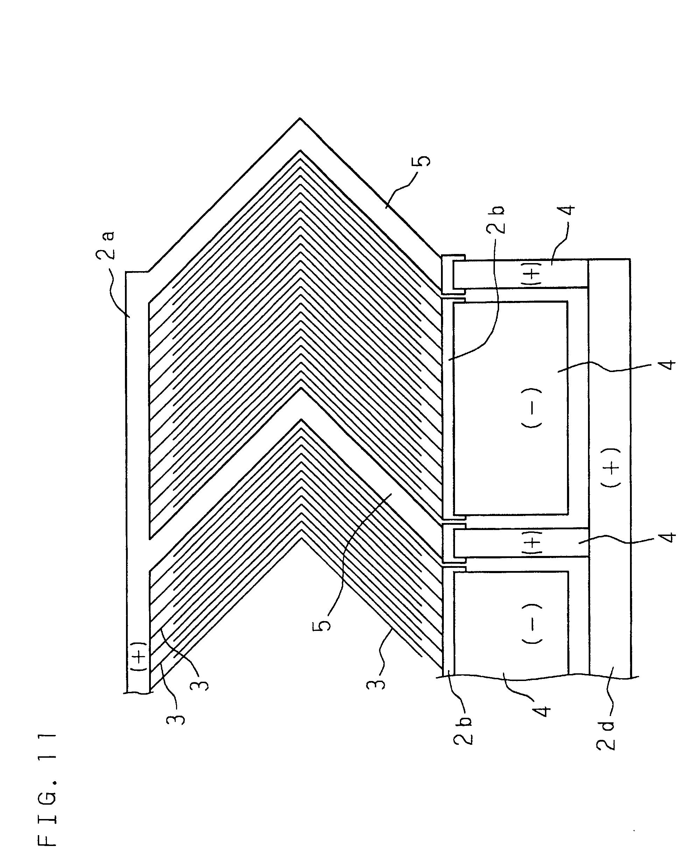

FIG. 11 is a schematic drawing showing a configuration of another example of pads 4, wherein a bus electrode 2d is utilized as pads for the drawing electrodes 5. As a result of such a configuration the area of pads can be omitted, therefore the frame region can be narrowed. In addition, in case the drawing electrodes 5 are used as electrodes for grounding and the pads 4 connected to the bus electrodes 2b are used as pads for signals in this configuration, the influence of crosstalk from outside such as other driving signals can be reduced because the pads for signals are disposed between the electrodes for grounding.

### (Fourth Embodiment)

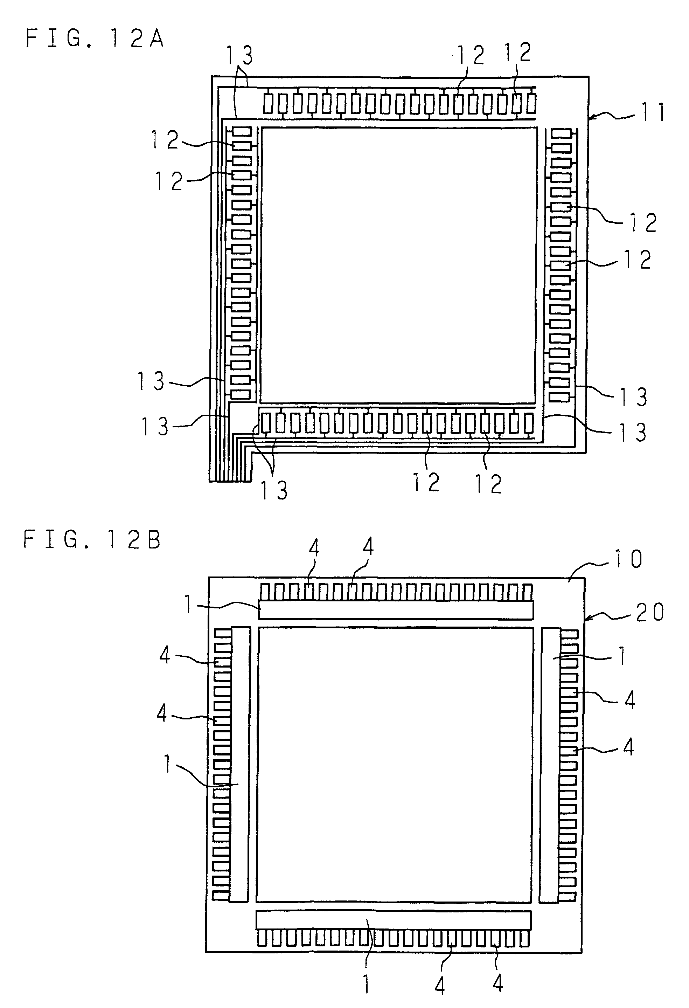

The following description relates to a flexible substrate 11 to be placed over a panel body 20 consisting of a non-piezoelectric substrate 10 provided with the foregoing IDTs 1 and pads 4, etc. FIG. 12A is a schematic drawing showing an overall configuration of a flexible substrate 11, and FIG. 12B is a schematic drawing of the panel body 20. The flexible substrate 11 is provided with a plurality of connection units 12 respectively corresponding to the plurality of pads 4 on the panel body 20 and leading lines (lead lines) 13 connected to the connection units 12 for extracting signals to the outside. Accordingly, signals are transmitted through the leading lines 13 with a low resistance provided on the flexible substrate 11, resulting in a reduction of resistive losses.

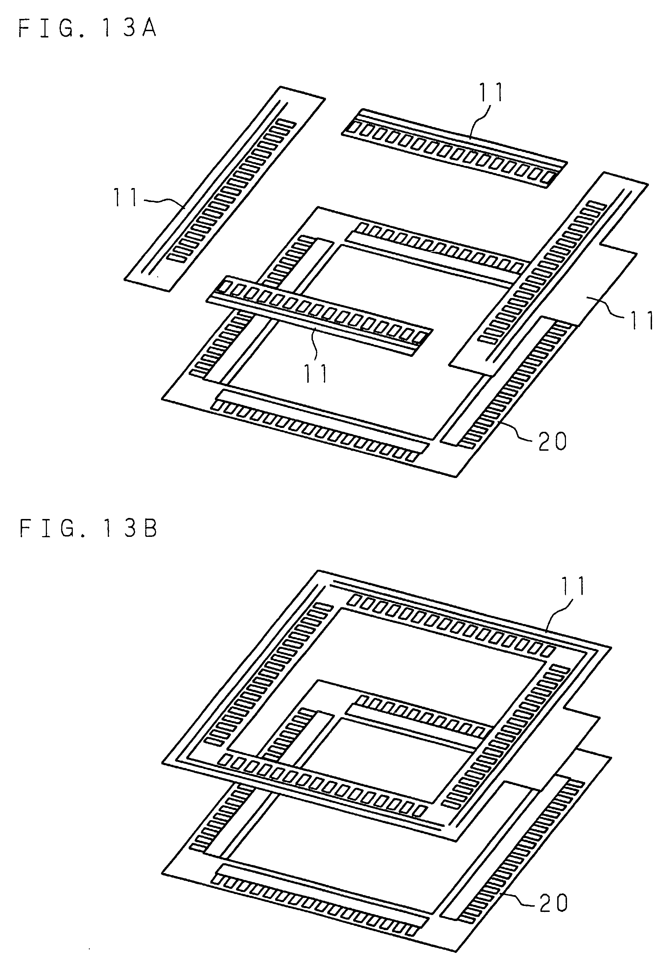

Also, the flexible substrate 11 can either be formed in four separate one-dimensional pieces (strips) so that each of them is placed over a respective side of the panel body 20 and bonded together as shown in FIG. 13A, or formed in a single piece of frame-shaped flexible substrate 11 conforming to the shape of the panel body 20, for covering all sides of the panel body 20 as shown in FIG. 13B.

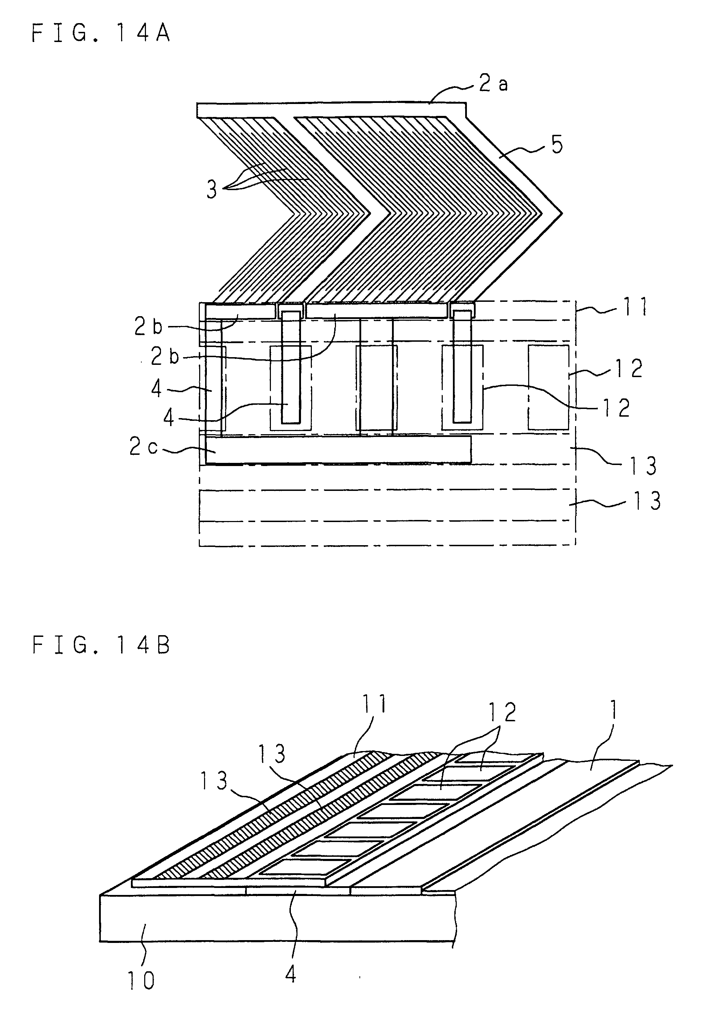

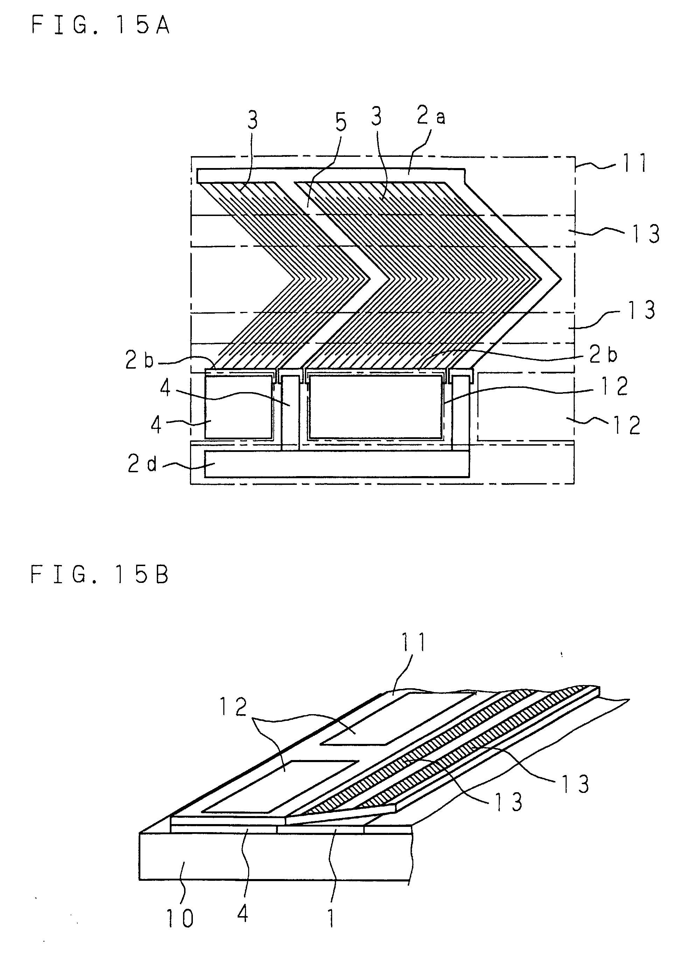

FIGs. 14A and 14B are a plan view and a perspective view respectively showing a layout example of the flexible substrate 11 placed over the panel body 20 provided with the pads of FIG. 10, and FIGs. 15A and 15B are a plan view and a perspective view respectively showing another layout example of the flexible substrate 11 placed over the panel body 20 provided with the pads of FIG. 11. Also, in FIGs. 14A and 15A, the position of flexible substrate 11 applied to the panel body 20 is shown by the one-dot chain line.

In the examples shown in FIGs. 15A and 15B, the flexible substrate 11 is overlapping also on the IDT 1 on the panel body 20 and the leading lines 13 are disposed over the IDT 1 in a form of a grade-separated intersection (multi-layer structure), therefore the frame region can be narrowed by more than 2mm compared with the examples of FIGs. 14A and 14B.

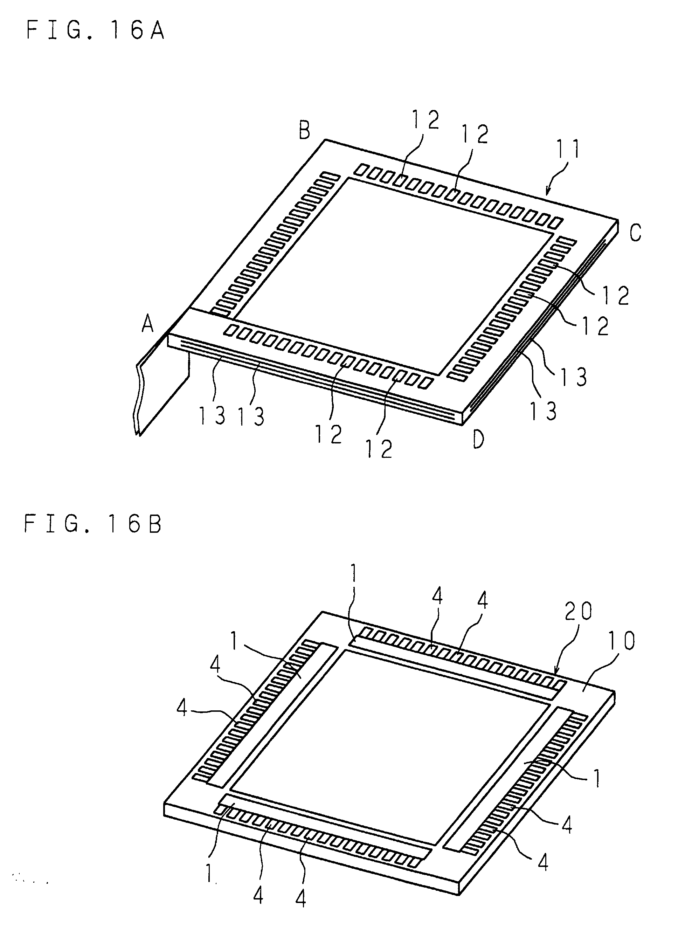

FIGs. 16A and 16B are perspective views showing configurations of a folding type flexible substrate 11, which is another example of a form of flexible substrate 11. In these examples, the leading lines 13 are disposed around the perimetrical sides (outer edges) of the panel body 20, instead of on the upper surface of the panel body 20. In other words, the flexible substrate 11 is folded around the substrate edges in a direction of thickness of the non-piezoelectric substrate 10 and the leading lines 13 run along the edges. As a result the frame region of panel body 20 can be narrowed by such a portion that would be required for disposing the leading lines 13. Also, since a terminal unit that is leading out the leading lines 13 toward outside is separated into two positions, influence of crosstalk can also be alleviated.

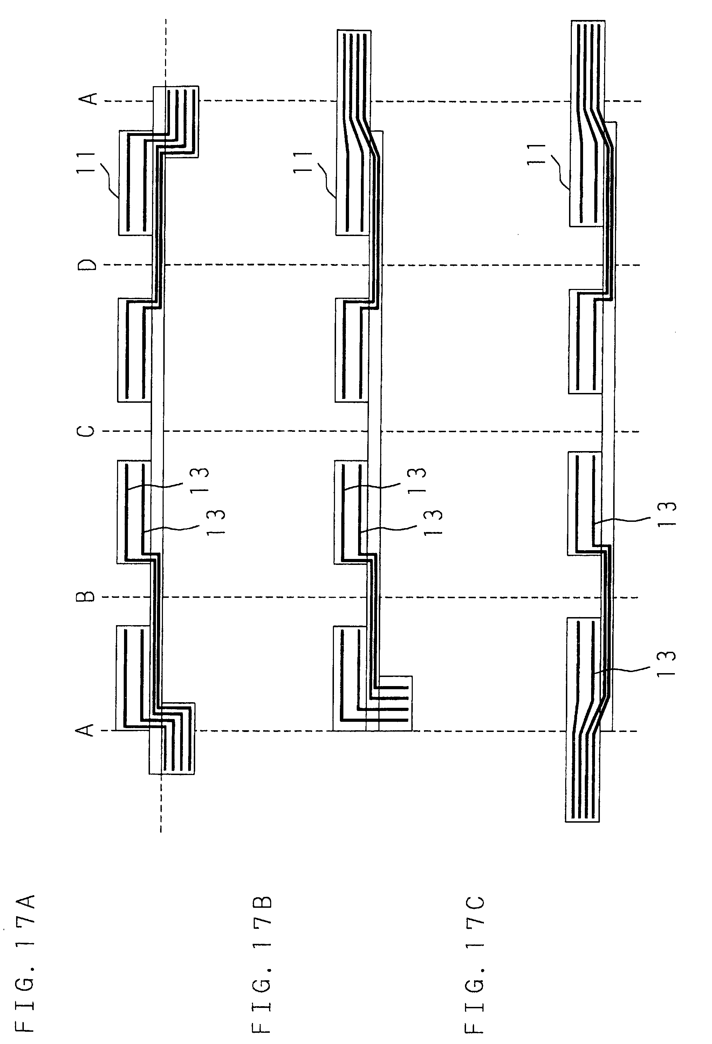

Further, in case the flexible substrate 11 is to be formed by folding a one-dimensional material (single strip), a space defined by a two-dimensional frame-shaped structure having an aperture at the center thereof can be formed without loss of materials, therefore a mass production at a low cost will be feasible. Especially, when the material is folded from one elongate piece for forming the flexible substrate 11, the width of the material to be used becomes minimal, resulting in a further cost cutting. Examples of unfolded forms of flexible substrates 11 designed as described above are shown in FIGs. 17A to 17C. When the leading lines 13 are disposed in series on one face as FIG. 17B, the structure is significantly simplified and a general-use type flat connector can be used for connection.

As so far described, in a touch panel device according to the invention, the drawing electrode is laid out from the inner bus electrode towards the edge of the substrate within the IDT. Therefore, resistance loss in the bus electrodes is reduced since signals will pass through the drawing electrode, and as a result the resistance loss in the transmission unit can be lowered without enlarging the frame region.

Preferably, the IDT is evenly segmented into a plurality of regions by the drawing electrodes. Therefore the conversion efficiency of waves excited at each side can be equalized and the conversion process can be simplified. Also, since the impedance of each region of IDT segmented by the drawing electrode may be made equal, excitation efficiency in each segmented region can be leveled. Also, since the capacitance of each segmented region of IDT may be made equal, a stabilized drive detection can be performed. Further, since the resistance value of each of the plurality of drawing electrodes may be made equal, resistive losses can be regulated within a certain level in each region.

The width of the drawing electrode is preferably set to (3/8+n)λ(λ: wavelength of the SAW, n: an integer that is not negative). In this way, characteristics become more predictable based on design parameters and a drop in excitation efficiency can be prevented. By forming the drawing electrode out of metal (metal strip array), a canceling effect of reflected waves can be expected also from the drawing electrode, and the effect of unwanted reflections that may occur in the IDT can be alleviated.

Further, in a touch panel device according to the invention, the pad connected to the drawing electrode may be provided within the bus electrode, therefore resistance can be reduced by using the conductor unit (conductive area) of the bus electrode, and the frame region can be narrowed by omitting any additional area for the pad. In addition, the influence of imperfect contact can be minimized thus resulting in an improved yield.

By placing the flexible substrate over the panel body, resistance loss can be further reduced and transmission can be stabilized. Also, the IDT can be covered with the flexible substrate, which then serves as a protective layer against an unexpected impact, therefore the reliability is increased. By locating the leading lines over (or under) the IDT, the frame region can be narrowed. Also, when the flexible substrate is folded over the panel sides and the lead lines are run along the edges of the panel body, the frame region can be further narrowed. Finally, since a two-dimensional flexible substrate can be formed by folding a single strip (one-dimensional material), mass production at a low cost can be realized.

## Claims

1. A touch panel device in which interdigital transducers [IDTs] (1) for exciting or receiving surface acoustic waves are provided, each IDT comprising a pair of mutually-facing bus electrodes (2a, 2b) oriented along the sides of a detecting region of the touch panel device and placed on a peripheral area of a substrate such that one bus electrode of the pair is positioned closer to the detecting region than the other bus electrode, and comb-like electrode fingers (3) which extend between, and are alternately connected to, the mutually-facing bus electrodes (2a, 2b); **characterized by** further comprising at least one drawing electrode (5) connected to said bus electrode (2a) positioned closer to the detecting region (10) and led out to the peripheral area side of said substrate (10) and is directly connected to the same electric potential as the bus electrode.

2. The touch panel device as set forth in Claim 1, wherein
said IDT (1) is segmented into a plurality of regions by the or each said drawing electrode (5).

3. The touch panel device as set forth in Claim 2, wherein
said drawing electrode (5) is disposed so that impedance of each segmented region of said IDT (1) becomes equal.

4. The touch panel device as set forth in Claim 3, wherein
electrostatic capacity of each segmented region of said IDT (1) is equal.

5. The touch panel device as set forth in Claim 3, wherein
a plurality of said drawing electrodes (5) are provided, and resistance value of each of said plurality of drawing electrodes (5) is equal.

6. The touch panel device as set forth in any of Claims 1 to 5, wherein
width of said drawing electrode (5) is (3/8+n)λ(λ: wavelength of the surface acoustic wave, n: an integer that is not negative).

7. The touch panel device as set forth in Claim 6, wherein
said drawing electrode (5) is of a metal strip array.

8. The touch panel device as set forth in any of Claims 1 to 7, wherein
at least one pad (4) connected to said drawing electrode (5) is provided within said bus electrodes (2b).

9. The touch panel device as set forth in any preceding claim, further comprising at least one pad (4) provided in said drawing electrode (5), and a flexible substrate (11) having at least one connection unit (12) corresponding to said pad (4).

10. The touch panel device as set forth in Claim 9, wherein
said flexible substrate (11) is disposed so as to cover said IDT (1).

11. The touch panel device as set forth in Claim 10, wherein
said flexible substrate (11) has at least one leading line (13) connected to said drawing electrode (5) on a portion thereof covering said IDT (1).

12. The touch panel device as set forth in any of Claims 9 to 11, wherein
said flexible substrate (11) is of a form folded in a direction of thickness of said substrate (10).

13. The touch panel device as set forth in Claim 12, wherein
said flexible substrate (11) is made from a flexible planar strip folded into a three-dimensional shape.

## Patentansprüche

1. Berührungsfeldvorrichtung, in der interdigitale Transducer [IDTs] (1) zum Anregen oder Empfangen von akustischen Oberflächenwellen vorgesehen sind, wobei jeder IDT ein Paar von einander zugewandten Buselektroden (2a, 2b) umfaßt, die längs der Seiten einer Detektionsregion der Berührungsfeldvorrichtung orientiert sind und auf einem peripheren Bereich eines Substrats so plaziert sind, daß eine Buselektrode des Paares näher als die andere Buselektrode an der Detektionsregion positioniert ist, und kammartige Elektrodenfinger (3), die sich zwischen den einander zugewandten Buselektroden (2a, 2b) erstrecken und alternierend mit ihnen verbunden sind; **dadurch gekennzeichnet, daß** sie ferner wenigstens eine Ziehelektrode (5) umfaßt, die mit der Buselektrode (2a) verbunden ist, die näher an der Detektionsregion (10) positioniert ist, und zu der Seite des peripheren Bereichs des Substrats (10) herausgeführt ist und mit demselben elektrischen Potential wie die Buselektrode direkt verbunden ist.

2. Berührungsfeldvorrichtung nach Anspruch 1, bei der der IDT (1) durch die oder jede genannte Ziehelektrode (5) in eine Vielzahl von Regionen segmentiert ist.

3. Berührungsfeldvorrichtung nach Anspruch 2, bei der
die Ziehelektrode (5) so angeordnet ist, daß die Impedanz von jeder segmentierten Region des IDT (1) gleich wird.

4. Berührungsfeldvorrichtung nach Anspruch 3, bei der
die elektrostatische Kapazität von jeder segmentierten Region des IDT (1) gleich ist.

5. Berührungsfeldvorrichtung nach Anspruch 3, bei der
eine Vielzahl der Ziehelektroden (5) vorgesehen ist und der Widerstandswert von jeder von der Vielzahl von Ziehelektroden (5) gleich ist.

6. Berührungsfeldvorrichtung nach irgendeinem der Ansprüche 1 bis 5, bei der
die Breite der Ziehelektrode (5) (3/8+n)λ beträgt (λ: wellenlänge der akustischen Oberflächenwelle, n: eine ganze Zahl, die nicht negativ ist).

7. Berührungsfeldvorrichtung nach Anspruch 6, bei der
die ziehelektrode (5) aus einem Metallband-Array ist.

8. Berührungsfeldvorrichtung nach irgendeinem der Ansprüche 1 bis 7, bei der
wenigstens ein Kissen (4), das mit der Ziehelektrode (5) verbunden ist, innerhalb der Buselektroden (2b) vorgesehen ist.

9. Berührungsfeldvorrichtung nach irgendeinem vorhergehenden Anspruch, ferner mit wenigstens einem Kissen (4), das in der Ziehelektrode (5) vorgesehen ist, und einem flexiblen Substrat (11), das wenigstens eine Verbindungseinheit (12) hat, die dem Kissen (4) entspricht.

10. Berührungsfeldvorrichtung nach Anspruch 9, bei der
das flexible Substrat (11) so angeordnet ist, um den IDT (1) zu bedecken.

11. Berührungsfeldvorrichtung nach Anspruch 10, bei der
das flexible Substrat (11) wenigstens eine Anschlußleitung (13) hat, die mit der Ziehelektrode (5) auf einem Abschnitt von sich verbunden ist, der den IDT (1) bedeckt.

12. Berührungsfeldvorrichtung nach irgendeinem der Ansprüche 9 bis 11, bei der
das flexible Substrat (11) eine Form hat, die in einer Dickenrichtung des Substrats (10) gefaltet ist.

13. Berührungsfeldvorrichtung nach Anspruch 12, bei der
das flexible Substrat (11) aus einem flexiblen planaren Band ist, das zu einer dreidimensionalen Gestalt gefaltet ist.

## Revendications

1. Dispositif à panneau tactile, dans lequel des transducteurs interdigités, notés IDT, (1) servant à exciter ou recevoir des ondes acoustiques de surface sont disposés, chaque transducteur interdigité comprenant une paire d'électrodes de bus mutuellement en regard (2a, 2b) orientées suivant les côtés d'une région de détection du dispositif à panneau tactile et placées sur une aire périphérique d'un substrat de façon qu'une électrode de bus de la paire soit placée plus près de la région de détection que l'autre électrode de bus, et des doigts d'électrodes (3) en forme de peigne qui s'étendent entre les électrodes de bus mutuellement en regard (2a, 2b) et leur sont connectées de manière alternée, **caractérisé en ce qu'**il comprend en outre au moins une électrode de tirage (5) connectée à ladite électrode de bus (2a) qui est placée le plus près de la région de détection (10) et conduisant au côté de l'aire périphérique dudit substrat (10) et est directement connecté au même potentiel électrique que l'électrode de bus.

2. Dispositif à panneau tactile selon la revendication 1, où ledit transducteur interdigité (1) est segmenté en une pluralité de régions par ladite ou chaque dite électrode de tirage (5).

3. Dispositif à panneau tactile selon la revendication 2, où ladite électrode de tirage (5) est disposée de façon que les impédances respectives de chaque région segmentée dudit transducteur interdigité (1) deviennent égales.

4. Dispositif à panneau tactile selon la revendication 3, où les capacités électrostatiques respectives de chaque région segmentée dudit transducteur interdigité (1) sont égales.

5. Dispositif à panneau tactile selon la revendication 3, où une pluralité desdites électrodes de tirage (5) sont prévues, et les valeurs de résistance respectives de chaque électrode de ladite pluralité d'électrodes de tirage (5) sont égales.

6. Dispositif à panneau tactile selon l'une quelconque des revendications 1 à 5, où la largeur de ladite électrode de tirage (5) est de (3/8+n) λ (λ étant la longueur d'onde de l'onde acoustique de surface et n étant un nombre entier qui n'est pas négatif).

7. Dispositif à panneau tactile selon la revendication 6, où ladite électrode de tirage (5) est faite d'un groupement de bandes de métal.

8. Dispositif à panneau tactile selon l'une quelconque des revendications 1 à 7, où au moins un plot (4) connecté à ladite électrode de tirage (5) est disposé à l'intérieur desdites électrodes de bus (2b).

9. Dispositif à panneau tactile selon l'une quelconque des revendications précédentes, comprenant en outre au moins un plot (4) placé dans ladite électrode de tirage (5), et un substrat souple (11) ayant au moins une unité de connexion (12) correspondant audit plot (4).

10. Dispositif à panneau tactile selon la revendication 9, où ledit substrat souple (11) est disposé de façon à couvrir ledit transducteur interdigité (1).

11. Dispositif à panneau tactile selon la revendication 10, où ledit substrat souple (11) possède au moins une ligne conductrice (13) connectée à ladite électrode de tirage (5) sur une partie de celle-ci couvrant ledit transducteur interdigité (1).

12. Dispositif à panneau tactile selon l'une quelconque des revendications 9 à 11, où ledit substrat souple (1) est constitué d'une forme pliée par la direction de l'épaisseur dudit substrat (10).

13. Dispositif à panneau tactile selon la revendication 12, où ledit substrat souple (11) est fait d'une bande plane souple pliée suivant une forme tridimensionnelle.
